# EUROPEAN PATENT APPLICATION

(11) **EP 1 808 312 A2**
(43) Date of publication of application: **18.07.2007**
(21) Application number: 06025863.9
(22) Date of filing: 13.12.2006
(51) Int. Cl.: B60C 1/00, B60C 17/00, C08K 3/36, C08L 7/00, C08L 9/00

(54) **Rubber compound for reinforcing a side portion of tire and run-flat tire**

(30) Priority: 11.01.2006 JP 2006003827
(71) Applicant: Sumitomo Rubber Industries, Ltd., Kobe-shi, Hyogo-ken (JP)
(72) Inventor: Hochi, Kazuo c/o Sumitomo Rubber Ind., Ltd., Kobe-shi Hyogo 651-0072 (JP)
(74) Representative: Manitz, Finsterwald & Partner GbR

(57) **Abstract**

There is provided a rubber compound for reinforcing a side portion of a tire and a run flat tire that can maintain satisfactory tensile elongation at break and also provide better run-flat performance. The rubber compound for reinforcing a side portion of a tire contains at least one of natural rubber and isoprene rubber in an amount of 20-80 parts by weight and syndiotactic crystal-containing butadiene rubber in an amount of 80-20 parts by weight to provide 100 parts by weight of a rubber compound, with silica blended therein in an amount of 5-50 parts by weight, the silica having a pH value of 7.0-12.0 in a 5% aqueous solution.

## Description

This nonprovisional application is based on Japanese Patent Application No. 2006-003827 filed with the Japan Patent Office on January 11, 2006, the entire contents of which are hereby incorporated by reference.

### BACKGROUND OF THE INVENTION

### Field of the Invention

The present invention relates to rubber compounds for reinforcing a side portion of tires, and run-flat tires.

### Description of the Background Art

In recent years a run-flat tire has been developed to allow vehicles to run safely if the tire is punctured. The run-flat tire eliminates the necessity of always carrying a spare tire and can thus be expected to reduce a vehicle in weight in its entirety. However, such run-flat tire punctured and thus running flat limits speed and distance traveled and accordingly there is a demand for a run-flat tire improved in durability.

As one example of such run-flat tire, Japanese Patent Laying-Open No. 2001-213999 discloses a rubber compound for reinforcing a tire and a run-flat tire employing the same. More specifically, the publication discloses a run-flat tire having a sidewall provided with a thick reinforcement rubber layer having a high modulus of elasticity so that if the tire is punctured it can still maintain stiffness and if it is repeatedly bent and deformed it can prevent the rubber from severe damage to allow vehicles to run long distances.

Furthermore as a method of enhancing rubber in modulus of elasticity there is a method increasing carbon black in amount to increase rubber for reinforcement in hardness to minimize or prevent deformation. Increasing carbon black in amount, however, contributes to an increased load on a kneading step, an extruding step and the like, and also provides a tendency to provide a physical, post-vulcanization property causing heat to be generated and thus impairs durability. Accordingly Japanese Patent Laying-Open No. 07-097481 discloses a rubber for reinforcement which contains carbon black without increasing its amount and has a syndiotactic crystal-containing butadiene rubber blended therein in an appropriate amount. Furthermore, Japanese Patent Laying-Open No. 2005-075952 discloses a rubber compound for reinforcing a side portion of a tire that has a syndiotactic crystal-containing rubber and silica blended therein in an appropriate amount.

The rubber compound disclosed in Japanese Patent Laying-Open No. 2001-213999, however, is low in stress (or modulus) when it is distorted to a level. Using a rubber low in modulus and also ensuring run-flat performance requires that the reinforcement rubber layer be increased in volume. Increasing the reinforcement rubber layer in volume, however, provides a tire disadvantageously increased in weight, a tendency to disadvantageously generate heat, and the like.

Furthermore the rubber for reinforcement as disclosed in Japanese Patent Laying-Open No. 07-097481 has a syndiotactic crystal-containing butadiene rubber blended therein, and can thus provide a rubber having a high modulus of elasticity, and hence enhanced durability. Additionally blending the syndiotactic crystal-containing butadiene rubber, however, contributes to disadvantageously reduced tensile elongation at break and hence poor durability.

Furthermore while the rubber for reinforcement as disclosed in Japanese Patent Laying-Open No. 2005-075952 can provide a rubber having a high modulus of elasticity without impaired tensile elongation at break, there still remain a issue therefor to provide better run-flat performance.

### SUMMARY OF THE INVENTION

The present invention has been made to overcome such disadvantages as described above and it contemplates a rubber compound for reinforcing a side portion of a tire and a run-flat tire that can maintain sufficient tensile elongation at break and also provide better run-flat performance.

The present invention in one aspect provides a rubber compound for reinforcing a side portion of a tire containing at least one of natural rubber and isoprene rubber in an amount of 20-80 parts by weight and syndiotactic crystal-containing butadiene rubber in an amount of 80-20 parts by weight to provide 100 parts by weight of a rubber compound, with silica blended therein in an amount of 5-50 parts by weight, said silica having a pH value of 7.0-12.0 in a 5% aqueous solution.

The present invention in another aspect provides a rubber compound for reinforcing a side portion of a tire containing natural rubber in an amount of 30-70 parts by weight and syndiotactic crystal-containing butadiene rubber in an amount of 70-30 parts by weight to provide 100 parts by weight of a rubber compound, with silica blended therein in an amount of 10-40 parts by weight, said silica having a pH value of 7.4-10.6 in a 5% aqueous solution.

The present invention in still another aspect provides a rubber compound for reinforcing a side portion of a tire containing natural rubber in an amount of 30-70 parts by weight and syndiotactic crystal-containing butadiene rubber in an amount of 70-30 parts by weight to provide 100 parts by weight of a rubber compound, with silica blended therein in an amount of 30-40 parts by weight, said silica having a pH value of 7.4-10.6 in a 5% aqueous solution.

The syndiotactic crystal-containing butadiene rubber can enhance the present rubber compound in stiffness. The silica having the above indicated property can prevent the present rubber compound from decreasing in tensile elongation at break. Satisfactory tensile elongation at break can be maintained and better run-flat performance can also be achieved.

Note that "a side portion of a tire" indicates at least one of a bead apex and a reinforcement rubber layer of a tire.

The rubber compound for reinforcing a side portion of a tire preferably provides a loss modulus of elasticity/(a complex modulus of elasticity)² of at most 7.0 × 10⁻⁹Pa⁻¹, more preferably at most 5.9 × 10⁻⁹Pa⁻¹.

This can further reduce or prevent deformation of a tire running flat, and hence heat otherwise generated therefrom. The rubber can thus less thermally degrade and thus be enhanced in durability.

The rubber compound for reinforcing a side portion of a tire preferably has a silica coupling agent blended for 100 parts by weight of the silica in an amount of 1.5-12 parts by weight. This can improve workability and tensile elongation at break.

The present run-flat tire is formed by employing the rubber compound for reinforcing a side portion of a tire. If the tire runs flat and loses its air pressure it can still support the vehicle and also exhibit excellent run-flat performance in durability.

Thus the present rubber compound for reinforcing a side portion of a tire can maintain satisfactory tensile elongation at break and also achieve better run-flat performance.

The foregoing and other objects, features, aspects and advantages of the present invention will become more apparent from the following detailed description of the present invention when taken in conjunction with the accompanying drawings.

### BRIEF DESCRIPTION OF THE DRAWING

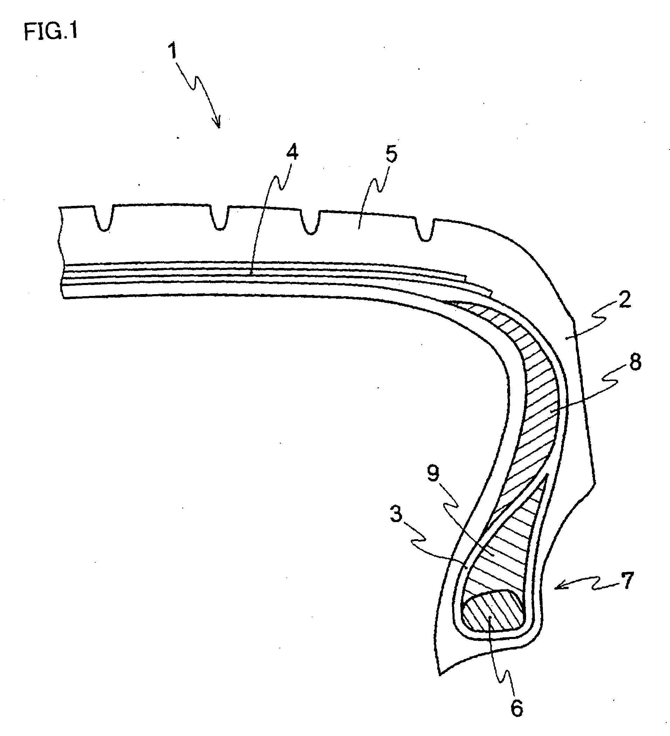

Fig. 1 is a cross section of a right half of a run-flat tire in an embodiment of the present invention.

### DESCRIPTION OF THE PREFERRED EMBODIMENT

Hereinafter reference will be made to the drawings to describe an embodiment of the present invention. Note that in the figures, identical or corresponding components are identically denoted and their description will not be repeated.

Fig. 1 is a cross section of a right half of a run-flat tire in an embodiment of the present invention. Fig. 1 shows only a main portion and a portion associated therewith alone hatched to indicate them in cross section and the remainder unhatched to help to understand the present invention. In other words, if the run-flat tire is cut, the unhatched portion also appears in the same cross section as the hatched portion.

In the present embodiment the run-flat tire is formed of a rubber compound for reinforcing a side portion of a tire, that contains at least one of natural rubber and isoprene rubber in an amount of 20-80 parts by weight and syndiotactic crystal-containing butadiene rubber in an amount of 80-20 parts by weight to provide 100 parts by weight of a rubber compound, with 5-50 parts by weight of silica blended therein, the silica having a pH value of 7.0-12.0 in a 5% aqueous solution.

The present embodiment provides a run-flat tire 1, as shown in Fig. 1, including a tread 5, a sidewall 2 extending from tread 5 at its opposite ends inward as seen in the direction of the radius of the tire, and a bead 7 connected to an inner end, as seen in the radial direction of the tire, of sidewall 2.

A carcass ply 3 extends between a pair of bead cores 6, which is arranged at bead 7, to reinforce tread 5, sidewall 2 and bead 7. Carcass ply 3 has a main portion and an end portion turned around bead core 6 from inside to outside, as seen in the direction of the width of the tire, and thus engaging to provide a turned portion. A belt layer 4 is arranged outer than carcass ply 3 as seen in the radial direction of the tire.

Bead 7 includes bead core 6 and a bead apex 9. Bead apex 9 is arranged between the main portion and the turn portion of carcass ply 3 adjacent to a peripheral surface of bead core 6.

A reinforcement rubber layer 8 is a portion provided at sidewall 2 to relatively enhance run-flat performance in durability. More specifically, reinforcement rubber layer 8 is arranged mainly internal to or inner than sidewall 2 and having a lateral cross section generally in the form of a crescent. In the present embodiment, as shown in Fig. 1, reinforcement rubber layer 8 is arranged at sidewall 2 between carcass ply 3 and an inner liner and has a geometry gradually decreasing in thickness in the radial direction of the tire. Furthermore, although not shown, run-flat tire 1 may be configured to have a second reinforcement rubber layer alone. Note that reinforcement rubber layer 8 and the second reinforcement rubber layer may be two or more layers.

Carcass ply 3 and reinforcement rubber layer 8 are formed of a rubber compound for reinforcing a side portion of a tire, that contains at least one of natural rubber and isoprene rubber in an amount of 20-80 parts by weight and syndiotactic crystal-containing butadiene rubber in an amount of 80-20 parts by weight to provide 100 parts by weight of a rubber compound, with 5-50 parts by weight of silica blended therein, the silica providing a nitrogen surface area of 20-500 m²/g and having a pH value of 7.0-12.0 in a 5% aqueous solution. Note that if the second reinforcement rubber layer is included, it is also formed by employing the rubber compound for reinforcing a side portion of a tire.

The rubber compound contains at least one of natural rubber and isoprene rubber in an amount of 20-80 parts by weight, preferably 30-70 parts by weight, more preferably 30-60 parts by weight. If the rubber compound contains less than 20 parts by weight of at least one of natural rubber and isoprene rubber, it is poor in workability. If the rubber compound contains at least 30 parts by weight of at least one of natural rubber and isoprene rubber, it exhibits excellent workability. If the rubber compound contains more than 80 parts by weight of at least one of natural rubber and isoprene rubber, it is poor in run-flat performance in durability. If the rubber compound contains at most 70 parts by weight of one of natural rubber and isoprene rubber it can provide better run-flat performance in durability. If the rubber compound contains at most 60 parts by weight of one of natural rubber and isoprene rubber it can provide further better run-flat performance in durability.

Furthermore the rubber compound contains syndiotactic crystal-containing butadiene rubber in an amount of 80-20 parts by weight, preferably 70-30 parts by weight, more preferably 70-40 parts by weight. If the rubber compound contains more than 80 parts by weight of the butadiene rubber, it is significantly impaired in workability. If the rubber compound contains at most 70 parts by weight of the butadiene rubber it can be enhanced in workability. If the rubber compound contains less than 20 parts by weight of the butadiene rubber, it is less effective in enhancing run-flat performance in durability. If the rubber compound contains at least 30 parts by weight of the butadiene rubber it can provide better run-flat performance in durability. If the rubber compound contains at least 40 parts by weight of the butadiene rubber it can provide further better run-flat performance in durability.

The butadiene rubber contains syndiotactic crystal in an amount preferably of 1-25%, more preferably 5-20%. The rubber containing the crystal in an amount of at least 1% can provide a sufficient syndiotactic component and hence sufficient stiffness. The rubber containing the crystal in an amount of at least 5% can provide further sufficient stiffness. In contrast, the rubber containing the crystal in the amount of at most 25% can prevent the syndiotactic component from coagulating in polybutadiene and thus provide enhanced durability. The rubber containing the crystal in the amount of at most 20% can provide further enhanced durability.

The syndiotactic crystal can for example be syndiotactic-1, 2-polybutadiene fiber. One such syndiotactic crystal-containing polybutadiene can be implemented for example by VCR-303, 412, 617 and the like produced by Ube Industries, Ltd.

The butadiene rubber is not limited in particular to any butadiene rubber as long as it contains butadiene rubber containing a syndiotactic crystal. For example, the butadiene rubber may contain butadiene rubber which does not contain a syndiotactic crystal as well as that containing the syndiotactic crystal. The butadiene rubber that does not contain the syndiotactic crystal is contained in an amount preferably of 0-50 parts by weight, more preferably 0-40 parts by weight. The butadiene rubber containing at most 50 parts by weight of that which does not contain the syndiotactic crystal can enhance durability. The butadiene rubber containing at most 40 parts by weight of that which does not contain the syndiotactic crystal can further enhance durability.

The silica is contained for 100 parts by weight of the rubber compound in an amount of 5-50 parts by weight, preferably 10-40 parts by weight, more preferably 15-30 parts by weight. If the silica is contained in an amount less than 5 parts by weight it is less effective in enhancing run-flat performance. If the silica is contained in an amount of at least 10 parts by weight, it increases the effect of enhancing run-flat performance. If the silica is contained in an amount of at least 15 parts by weight it further increases the effect of enhancing run-flat performance. In contrast, if the silica is contained in an amount exceeding 50 parts by weight, it cannot provide the effect of enhancing run-flat performance and significantly impair workability in a kneading step. If the silica is contained in an amount of at most 30 parts by weight, it can further enhance workability. If the silica is contained in an amount of at most 25 parts by weight it can furthermore enhance workability.

The silica preferably provides a nitrogen surface area (N₂SA) of 20-500 m²/g, more preferably 50-300 m²/g. If the silica provides an N₂SA of less than 20m²/g, it tends to fail to provide its reinforcement effect. If the silica provides an N₂SA of at least 50 m²/g, its reinforcement effect can better be obtained. In contrast, if the silica provides an N₂SA exceeding 500m²/g, the silica is decreased in dispersiveness and tends to reduce workability. If the silica provides an N₂SA of at most 300 m²/g it can further enhance workability.

The silica, in a 5% aqueous solution, provides a pH value of 7.0-12.0, more preferably 7.2-11.0, still more preferably 7.4-10.6. A pH lower than 7.0 contributes to heat generated in an amount which is not small. A pH of at least 7.2 can minimize or prevent heat generation. A pH of at least 7.4 can further minimize or prevent heat generation. In contrast, a pH higher than 12.0 renders it difficult to produce the silica and thus results in an increased cost. A pH of at most 11.0 can contribute to a reduced cost, and a pH of 10.6 can contribute to a further reduced cost.

Preferably the silica is sedimentated (or precipitated) silica. The silica can be classified into dry process silica and wet process silica, and the wet process silica can further be classified into precipitated silica obtained by causing the wet process silica to react in an alkaline environment, and gelated silica obtained by causing the wet process silica to react in an acidic environment. The precipitated silica can controlled in temperature for reaction, pH, and salt concentration to control the growth of a primary particle to provide silica having a variety of condensation structures. Employing the precipitated silica allows silica providing a large specific surface area, a developed primary-particle condensation structure, and a large porous volume and a large amount of adsorption to be blended in the rubber compound for reinforcing a side portion of a tire. Furthermore, the precipitated silica has as many as approximately eight silanol groups/nm² on a surface of a particle thereof. The silanol group exhibits a function as a filler for reinforcement and adsorptiveness. As such, the silica that is implemented by the precipitated silica can provide enhanced reinforcement and increased adsorptiveness.

Preferably the rubber compound for reinforcing a side portion of a tire can also have a silane coupling agent blended therein, such as bis-3-trimethoxysilylpropyl tetrasulfide, bis-3-triethoxysilylpropyl tetrasulfide, 3-mercaptopropyltrimethoxysilane, 3-mercaptopropyltriethoxysilane, 2-mercaptopropyltrimethoxysilane, 2-mercaptopropyltriethoxysilane, 3-trimethoxysilylpropylbenzothiazoletetrasulfide, 3-triethoxysilylpropylbenzothiazoletetrasulfide, or the like.

The silane coupling agent is blended relative to the silica in an amount preferably of 1.5-12 parts by weight, more preferably 5-10 parts by weight The silane coupling blended in an amount of at least 1.5 parts by weight can exhibit its effect provided by blending the same, and hence improve workability. The silane coupling blended in an amount of at least 5 parts by weight can further enhance workability. In contrast, blending the agent in an amount of at most 12 parts by weight prevents too high a cost for blending the same. Blending the agent in an amount of at most 10 parts by weight can contribute to a reduced cost for blending the same.

Furthermore the rubber compound for reinforcing a side portion of a tire may have other additives blended therein, as appropriate, such as a filler, a curing agent, an accelerator, an auxiliary accelerator, an antioxidant, a softener and/or a similar additive that is normally blended in a rubber compound.

The filler can for example be carbon black, calcium carbonate, or the like. The carbon black can for example be HAF, ISAF, SAF or similar channel black, furnace black, acetylene black, or thermal black, preferably HAF, ISAF, SAF. The carbon black preferably is contained in an amount falling within a range of 40-80 parts by weight for 100 parts by weight of the rubber compound

The curing agent can for example be organic peroxide or a sulfur-based curing agent. The organic peroxide that can for example be benzoyl peroxide, dicumyl peroxide, di-t-butyl peroxide, t-butyl cumyl peroxide, methyl ethyl ketone peroxide, cumene hydroperoxide, 2,5-dimethyl-2,5-di (t-butyl peroxy) hexane, 2,5-dimethyl-2, 5-di (benzoyl peroxy) hexane, 2,5-dimethyl-2,5-di (t-butyl peroxy) hexyne-3 or 1,3-bis (t-butyl peroxy propyl) benzene, or the like. The sulfur-based curing agent can for example be sulfur, morpholine disulfide or the like. Of these, sulfer is preferably used.

The accelerator can be any accelerator that contains at least one of sulfenamide type accelerator, thiazole type accelerator, thiuram type accelerator, thiourea type accelerator, guanidine type accelerator, dithiocarbamate type accelerator, aldehyde-amine type or aldehyde-ammonia type accelerator, imidazoline type accelerator and xanthate type accelerator. The sulfenamide type accelerator can for example be CBS (N-cyclohexyl-2-benzothiazyl sulfen amide), TBBS (N-t-butyl-2-benzothiazyl sulfen amide), N,N-dicyclohexyl-2-benzothiazyl sulfen amide, N-oxydiethylene-2-benzothiazyl sulfen amide, N,N-diisopropyl-2-benzothiazole sulfen amide or a similar sulfenamide compound. The thiazole type accelerator can for example be MBT (2-mercaptobenzothiazole), MBTS (dibenzothiazyl disulfide), sodium salt of 2-mercaptobenzothiazole, zinc salt of 2-mercaptobenzothiazole, copper salt of 2-mercaptobenzothiazole, cyclohexyl amine salt, 2-(2,4-dinitrophenyl) mercaptobenzothiazole, 2-(2,6-diethyl-4-morpholinothio) benzothiazole or a similar thiazole compound. The thiuram type accelerator can for example be TMTD (tetramethylthiuram disulfide), tetraethylthiuram disulfide, tetramethylthiuram monosulfide, dipentamethylenethiuram disulfide, dipentamethylenethiuram monosulfide, dipentamethylenethiuram tetrasulfide, dipentamethylenethiuram hexasulfide, tetrabutylthiuram disulfide, pentamethylenethiuram tetrasulfide or a similar thiuram compound. The thiourea type accelerator can for example be thiocarbamide, diethyl thiourea, dibutyl thiourea, trimethyl thiourea, diorthotolyl thiourea, or a similar thiourea compound. The guanidine type accelerator can for example be diphenylguanidine, diorthotolyl guanidine, triphenylguanidine, orthotolylbiguanide, diphenylguanidine phthalate or a similar guanidine-based compound. The dithiocarbamate type accelerator can for example be zinc ethylphenyl dithiocarbamate, zinc butylphenyl dithiocarbamate, sodium dimethyl dithiocarbamate, zinc dimethyl dithiocarbamate, zinc diethyl dithiocarbamate, zinc dibutyl dithiocarbamate, zinc diamyl dithiocarbamate, zinc dipropyl dithiocarbamate, complex salt of zinc pentamethylene dithiocarbamate and piperidine, zinc hexadecyl (or octadecyl) isopropyl dithiocarbamate, zinc dibenzyl dithiocarbamate, sodium diethyl dithiocarbamate, piperidine pentamethylene dithiocarbamate, selemium dimethyl dithiocarbamate, tellurium diethyl dithiocarbamate, cadmium diamyl dithiocarbamate or a similar dithiocarbamate type compound. The aldehyde-amine type or aldehyde-ammonia type accelerator can for example be a reaction product of acetaldehyde and aniline, a condensation product of butylaldehyde and aniline, hexamethylene tetramine, a reaction product of acetaldehyde and ammonia, or the like. The imidazoline type accelerator can for example be 2-mercaptoimidazoline or a similar imidazoline compound. The xanthate type accelerator can for example be zinc dibutyl xanthate or a similar xanthate compound.

The auxiliary accelerator can for example be zinc oxide (hydrozincite) or the like. Zinc oxide together with aliphatic acid can form a complex compound providing an enhanced acceleration effect.

The antioxidant can appropriately be selected for use from amine type antioxidant, phenol type antioxidant, imidazole type antioxidant, metallic carbamate, wax, or the like.

The softener can for example be process oil, lubricating oil, paraffin, liquid paraffin, petroleum asphalt, Vaseline or a similar petroleum softener, castor oil, linseed oil, rape oil, coconut oil or a similar fatty oil type softener, tall oil, factice, beeswax, carnauba wax, lanoline or a similar wax, and linoleic acid, palmitic acid, stearic acid, lauric acid or a similar fatty acid. The softener can further enhance workability in kneading.

Preferably the rubber compound for reinforcing a side portion of a tire is adjusted so that after it is vulcanized it has a loss modulus of elasticity (E") and a complex modulus of elasticity (E*) satisfying E"/(E*)² ≤ 7.0 × 10⁻⁹ Pa ⁻¹. Satisfying E"/(E^{*})² ≤ 7.0 × 10⁻⁹ Pa ⁻¹ can further reduce or prevent deformation of a tire running flat, and hence heat otherwise generated therefrom. The rubber can thus less thermally degrade and thus be prevented from destruction.

Reinforcement rubber layer 8 and bead apex 9 preferably have a thickness of 5-30 mm, more preferably 8-20 mm. Reinforcement rubber layer 8 and bead apex 9 having a thickness of at least 5 mm can be sufficiently stiff and thus provide better run-flat performance. In contrast, reinforcement rubber layer 8 and bead apex 9 having a thickness of at most 30 mm have a thickness that is not too large and can thus prevent a tire from having an excessively large weight. Reinforcement rubber layer 8 and bead apex 9 having a thickness of at most 20 mm allow a tire to have a reduced weight.

Run-flat tire 1 of the present embodiment can be produced in a method of producing a typical tire. Note that the rubber compound for reinforcing a side portion of a tire can be produced by employing a roll, a Banbury mixer, a kneader and similar known rubber kneading equipment to mix the aforementioned components together.

As has been described above, the present invention in an embodiment provides a rubber compound for reinforcing a side portion of a tire, that contains at least one of natural rubber and isoprene rubber in an amount of 20-80 parts by weight and syndiotactic crystal-containing butadiene rubber in an amount of 80-20 parts by weight to provide 100 parts by weight of a rubber compound, with 5-50 parts by weight of silica blended therein, the silica having a pH value of 7.0-12.0 in a 5% aqueous solution. Blending the syndiotactic crystal-containing butadiene rubber can enhance the present rubber in stiffness. Blending the silica can enhance the present rubber in modulus of elasticity without impairing tensile elongation at break. The silica having a pH falling within the aforementioned range allows the present rubber to provide more reinforcement and more adsorptiveness, and hence better run-flat performance.

### Example

In the present example how effective the present rubber compound for reinforcing a side portion of a tire is was examined. Initially, with reference to Table 1 below, a rubber compound for reinforcing a side portion of a tire was produced for each of the present examples and comparative examples in the following method:
Present Examples 1-3 and Comparative Examples 1-6
A recipe for blending, as shown in Table 1, was followed to knead materials other than sulfur and the accelerator in a BR Banburry mixer such that the rubber's components are first kneaded, followed by the filler and then an agent. Subsequently, an 8-inch roll was employed to mix sulfur and the accelerator and the intermediate product was vulcanized at 150°C for 30 minutes to prepare a rubber compound for reinforcing a side portion of a tire. The obtained rubber compound was subjected to the following test.

**Table 1**

| | Present Example 1 | Present Example 2 | Present Example 3 | Comparative Example 1 | Comparative Example 2 | Comparative Example 3 | Comparative Example 4 | Comparative Example 5 | Comparative Example 6 |
|---|---|---|---|---|---|---|---|---|---|
| NR ^{*1} | 30 | 70 | 70 | 60 | 100 | - | 10 | 70 | 70 |
| BR1 ^{*2} | 70 | 30 | 30 | 40 | - | 100 | 10 | 30 | 30 |
| BR2 ^{*3} | - | - | - | - | - | - | 80 | - | - |
| Silica 1 ^{*4} | - | - | - | 30 | - | - | - | - | - |
| Silica 2 ^{*5} | 30 | 30 | - | - | 30 | 30 | 30 | - | 60 |
| Silica 3 ^{*6} | - | | 40 | - | - | - | - | - | - |
| Carbon black ^{*7} | 50 | 50 | 50 | 50 | 50 | 70 | 50 | 50 | 50 |
| Stearic acid ^{*8} | 2 | 2 | 2 | 2 | 2 | 2 | 2 | 2 | 2 |
| Hydrozincite ^{*9} | 4 | 4 | 4 | 4 | 4 | 4 | 4 | 4 | 4 |
| Antioxidant ^{*10} | 1 | 1 | 1 | 1 | 1 | 1 | 1 | 1 | 1 |
| Coupling agent ^{*11} | 1.6 | 2.4 | 2.4 | 2.4 | - | - | - | 0.4 | - |
| Insoluble sulfur ^{*12} | 4 | 4 | 4 | 4 | 4 | 4 | 4 | 4 | 4 |
| Accelerator ^{*13} | 2.5 | 2.5 | 2.5 | 2.5 | 2.5 | 2.5 | 2.5 | 2.5 | 2.5 |
| E"/(E*)²[10⁻⁹Pa ⁻¹] | 5.4 | 6.0 | 5.9 | 6.5 | 8.1 | 3.9 | 7.5 | 7.8 | 5.1 |
| Tensile elongation at break | 100 | 106 | 104 | 100 | 110 | 80 | 85 | 104 | 92 |
| Run-flat performance | 142 | 120 | 118 | 100 | 75 | 80 | 84 | 90 | 97 |

Hereinafter will be described a variety of components, agents and the like blended in the present examples 1 and 2 and comparative examples 1-6. Note that Table 1 indicates the components, agents and the like blended in amounts as represented in parts by weight.
* 1 Natural Rubber: NR RSS#3 produced by Southland Rubber Co., Ltd.
* 2 Butadiene Rubber 1: VCR412 (containing syndiotactic crystal in an amount of 12%) produced by Ube Industries, Ltd.
* 3 Butadiene Rubber 2: BR1220 (containing syndiotactic crystal in an amount of 0%) produced by ZEON CORPORATION.
* 4 Silica 1: VN3 (having an N₂SA of 175m²/g, and a pH of 6.2 in a 5% aqueous solution) produced by Degussa.
* 5 Silica 2: Carplex 67# (having an N₂SA of 429 m²/g, and a pH of 7.4 in a 5% aqueous solution) produced by Degussa.
* 6 Silica 3: Carplex 1120# (having an N₂SA of 109 m²/g, and a pH of 10.6 in a 5% aqueous solution) produced by Degussa.
* 7 Carbon Black: N550 produced by CABOT JAPAN K.K.
* 8 Stearic Acid: Tsubaki produced by NOF CORPORATION.
* 9 Hydrozincite: zinc oxide type 2 produced by MITSUI KINZOKU
* 10 Antioxidant: Santoflex 13 produced by Flexis Co.
* 11 Silane Coupling Agent: Si69 (bis-3-triethoxysilylpropyl tetrasulfide) produced by Degussa.
* 12 Insoluble Sulfur: MU-CRON OT produced by SHIKOKU CHEMICALS CORPORATION
* 13 Accelerator: NOCCELER NS produced by OUCHISHINKO CHEMICAL INDUSTRIAL CO., LTD.
Measuring E"/ (E*)²
Each rubber compound for reinforcing a side portion of a tire was measured with a viscoelasticity spectrometer available from IWAMOTO Quartz Glass Lab. Co., Ltd. at 70°C with a 10% initial distortion and a ± 1% dynamic distortion and at a frequency of 10Hz to obtain its loss modulus of elasticity E" and complex modulus of elasticity E* and calculate E"/ (E*)², as indicated in Table 1.

### Tensile Elongation at Break

Each rubber compound for reinforcing a side portion of a tire was employed to produce a sheet having a gauge of approximately 2 mm and its tensile elongation at break was measured in conformity with JIS K 6521. The measured tensile elongation at break is represented by an index with comparative example 1 as 100 (or a reference), as indicated in Table 1. Note that larger indexes are better.

### Run-Flat Performance

Each rubber compound for reinforcing a side portion of a tire was employed to produce a tire having a size of 235/50R18 and four such tires were attached to a vehicle of a class of 2,500 cc. With an air pressure of 0 set, the vehicle was run at a constant speed of 80 km per hour to measure the distance that the vehicle ran until it had a tire destructed, as represented by an index with comparative example 1 as 100, as shown in Table 1. Note that larger indexes indicate better run-flat performance.

### Evaluation

As shown in Table 1, it has been found that the present embodiments 1-3, i.e., rubber compounds for reinforcing a side portion of a tire, that contain at least one of natural rubber and isoprene rubber in an amount of 20-80 parts by weight and syndiotactic crystal-containing butadiene rubber in an amount of 80-20 parts by weight to provide 100 parts by weight of a rubber compound, with 5-50 parts by weight of silica blended therein, the silica having a pH value of 7.0-12.0 in a 5% aqueous solution, maintain sufficient tensile elongation at break and are also significantly excellent in run-flat performance.

In contrast, comparative example 1 employing silica having a pH value that does not fall within a range of 7.0-12.0 in a 5% aqueous solution, is inferior to the present examples 1-3 in run-flat performance.

Comparative examples 2-4 had a syndiotactic crystal-containing butadiene rubber blended therein in an amount that does not fall within a range of 80-20 parts by weight. They have been found to be poor in run-flat performance.

Comparative example 5 did not have silica blended therein and was thus poor in run-flat performance.

Comparative example 5 had silica, which has a pH value of 7.0-12.0 in a 5% aqueous solution, blended therein in an amount that does not fall within a range of 5-50 parts by weight. It was poor in tensile elongation at break and run-flat performance.

Although the present invention has been described and illustrated in detail, it is clearly understood that the same is by way of illustration and example only and is not to be taken by way of limitation, the spirit and scope of the present invention being limited only by the terms of the appended claims.

## Claims

1. A rubber compound for reinforcing a side portion of a tire containing at least one of natural rubber and isoprene rubber in an amount of 20-80 parts by weight and syndiotactic crystal-containing butadiene rubber in an amount of 80-20 parts by weight to provide 100 parts by weight of a rubber compound, with silica blended therein in an amount of 5-50 parts by weight, said silica having a pH value of 7.0-12.0 in a 5% aqueous solution.

2. The rubber compound for reinforcing a side portion of a tire according to claim 1, providing a loss modulus of elasticity/(a complex modulus of elasticity)² of at most 7.0 × 10⁻⁹Pa⁻¹.

3. The rubber compound for reinforcing a side portion of a tire according to claim 1, wherein for 100 parts by weight of said silica, a silica coupling agent is blended in an amount of 1.5-12 parts by weight.

4. A run-flat tire formed by employing the rubber compound for reinforcing a side portion of a tire according to claim 1.

5. A rubber compound for reinforcing a side portion of a tire containing natural rubber in an amount of 30-70 parts by weight and syndiotactic crystal-containing butadiene rubber in an amount of 70-30 parts by weight to provide 100 parts by weight of a rubber compound, with silica blended therein in an amount of 10-40 parts by weight, said silica having a pH value of 7.4-10.6 in a 5% aqueous solution.

6. The rubber compound for reinforcing a side portion of a tire according to claim 5, providing a loss modulus of elasticity/(a complex modulus of elasticity)² of at most 7.0 × 10⁻⁹Pa⁻¹.

7. The rubber compound for reinforcing a side portion of a tire according to claim 5, wherein for 100 parts by weight of said silica, a silica coupling agent is blended in an amount of 1.5-12 parts by weight.

8. A run-flat tire formed by employing the rubber compound for reinforcing a side portion of a tire according to claim 5.
